**Europäisches Patentamt**

**European Patent Office**

**Office européen des brevets**

(19)

(11) Veröffentlichungsnummer : **0 370 168 B1**

(12)

# EUROPÄISCHE PATENTSCHRIFT

(45) Veröffentlichungstag der Patentschrift :
**19.02.92 Patentblatt 92/08**

(51) Int. Cl.⁵ : **B60K 1/00,** B60G 3/00, B60G 11/14, B62D 7/02, B60K 7/00

(21) Anmeldenummer : **89113309.2**

(22) Anmeldetag : **20.07.89**

(54) Antriebseinheit für ein Fahrzeug in einem fahrerlosen Transport-System (FTS).

(30) Priorität : **23.11.88 DE 3839433**

(43) Veröffentlichungstag der Anmeldung :
**30.05.90 Patentblatt 90/22**

(45) Bekanntmachung des Hinweises auf die Patenterteilung :
**19.02.92 Patentblatt 92/08**

(84) Benannte Vertragsstaaten :
**DE FR IT**

(56) Entgegenhaltungen :
**BE-A- 684 515**
**DE-A- 3 204 566**
**DE-C- 361 481**
**DE-C- 751 796**
**FR-A- 2 152 754**
**GB-A- 1 587 424**
**US-A- 2 760 787**

(73) Patentinhaber : **HURTH Getriebe und Zahnräder G.m.b.H.**
**Moosacher Strasse 36**
**W-8000 München 40 (DE)**

(72) Erfinder : **Denzin, Wolfgang**
**Ludwig-Braille-Strasse 3**
**W-8000 München 70 (DE)**
Erfinder : **Eichinger, Johann**
**Edelweissstrasse 15**
**W-8011 Vaterstetten (DE)**
Erfinder : **Simon, Max, Dr.-Ing.**
**Blumenstrasse 14**
**W-8037 Olching (DE)**

Jouve, 18, rue Saint-Denis, 75001 PARIS

## Beschreibung

Die Erfindung betrifft eine Antriebseinheit für ein Fahrzeug in einem fahrerlosen Transport-System (FTS) gemäß dem Oberbegriff des Hauptanspruchs.

## Stand der Technik

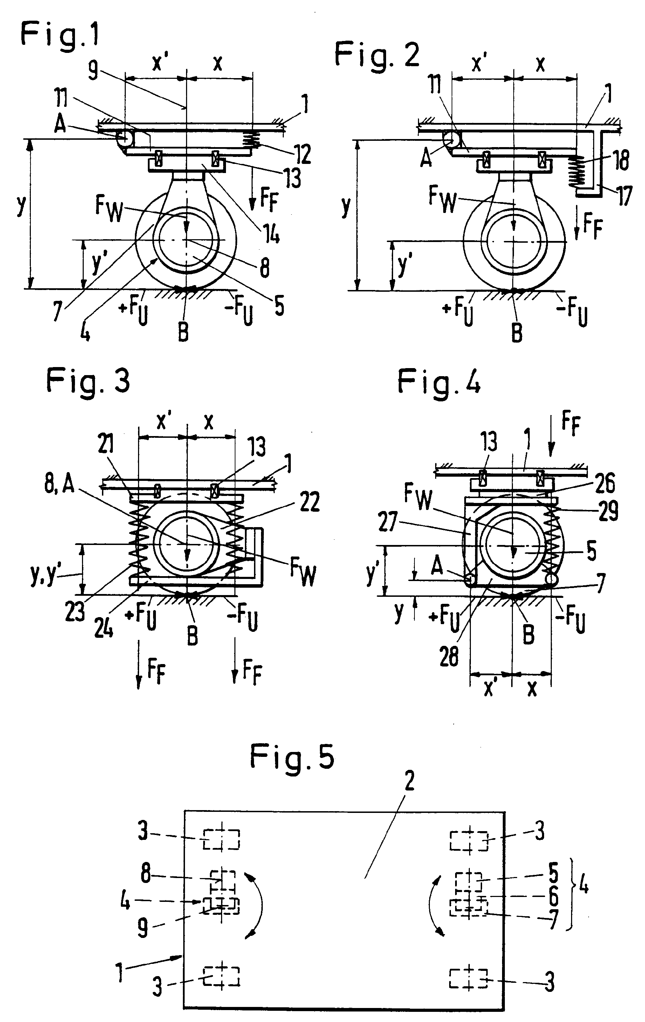

Bei Fahrzeugen der genannten Art muß für die Antriebseinheit ein Höhenausgleich relativ zum Fahrgestell möglich sein, um bei Bodenunebenheiten den Bodenkontakt des Antriebs- bzw. Lenkrades mit ausreichendem Druck zu gewährleisten. Es sind schon Fahrantriebe ausgeführt worden, bei denen das Antriebs- bzw. Lenkrad an Schwingen aufgehängt und dem erforderlichen Höhenausgleich entsprechend abgefedert ist. In den Figuren 1 bis 3 sind drei bekannte Lösungen dargestellt. Allen ist der Nachteil gemeinsam, daß für das Antriebs- bzw. Lenkrad im Bereich des Höhenausgleichs keine vertikale und lageneutrale Führung gewährleistet ist, die für ein gutes Fahrverhalten jedoch unerläßlich ist. Bei den Ausführungen nach den Fig. 1 und 2 kommt als weiterer Nachteil die große Bauhöhe hinzu, außerdem muß das Verhältnis $Y : Y' > 1$ als sehr ungünstig angesehen werden, wobei Y den Abstand des Schwingen-Anlenkpunktes vom Boden und $Y'$ den Radius des Antriebs- bzw. Lenkrades bezeichnen. Mit ihrer geringeren Bauhöhe und einem Verhältnis $Y : Y' = 1$ weist die Ausführung nach Fig. 3 zwar diese Nachteile nicht auf, aber hier ist das Federungssystem, das auch die Lenkbewegung mitmachen muß, überbestimmt.

## Aufgabe

Ausgehend von den aufgezeigten Nachteilen bekannter Ausführungen soll eine Antriebseinheit der genannten Art so ausgebildet werden, daß ihre Führung im Bereich der für den Höhenausgleich erforderlichen Bewegung eine weitestgehend senkrechte und lageneutrale Verlagerung ermöglicht, bei der jedes Verkanten und damit Klemmen ausgeschlossen ist, und daß die ganze Einheit eine niedrige Bauhöhe aufweist.

## Lösung

Die Aufgabe wird gelöst mit einer Antriebseinheit, die die kennzeichnenden Merkmale des Patentanspruchs 1 aufweist und mit den Merkmalen der Patentansprüche 2 bis 7 in zweckmäßiger Weise weitergebildet wird. Die Vorteile der erfindungsgemäßen Ausführung bestehen insbesondere darin, daß bei niedriger Bauhöhe eine senkrecht verlaufende, verkantungsfreie Höhenanpassung des Antriebs- bzw. Lenkrades beim Überfahren von Bodenunebenheiten gewährleistet ist.

## Zeichnungen

Die Erfindung wird nachstehend anhand des in drei Figuren dargestellten Standes der Technik und eines in sechs Figuren dargestellten Ausführungsbeispiels beschrieben. Es zeigen

Fig. 1 schematisch eine bekannte Antriebseinheit für ein Fahrzeug eines FTS-Systems,
Fig. 2 und 3 ebenfalls schematisch zwei weitere bekannte Antriebseinheiten,
Fig. 4 ebenfalls schematisch die erfindungsgemäße Antriebseinheit,
Fig. 5 die Anordnung derartiger Antriebseinheiten in einem Fahrzeug eines FTS-Systems,
Fig. 6 und 7 zwei Ausführungen für die Schwinge und die Anordnung der Feder, und
Fig. 8 und 9 eine Vorrichtung zum Einstellen der Federvorspannung in zwei verschiedenen Ausführungen.

## Beschreibung

In der Großserienfertigung werden vielfach fahrerlose Transportsysteme (FTS) eingesetzt, sei es zum Transport von Werkstücken zu oder von den Fertigungseinrichtungen oder als Träger für Aggregate, die mehrere Montagestationen durchlaufen. Die Fahrzeuge 1 (Figur 5) mit einem nicht dargestellten, dem jeweiligen Verwendungszweck angepaßten Aufbau oder mit einer Ladefläche 2 laufen auf vier Rädern 3. Zusätzlich sind ein oder zwei Antriebseinheiten 4 vorhanden, die, wie die Räder 3, an der Unterseite des Fahrzeugs angeordnet sind. Die in einem Drehkranzlager um eine vertikale Achse 9 schwenkbar aufgenommene Antriebseinheit 4 besteht im wesentlichen aus einem Elektro-Motor 5, einem Getriebe 6 und einem Antriebsrad 7, das gleichzeitig zur Lenkung des Fahrzeugs 1 dient. Beim Überfahren von Bodenunebenheiten kann eines der vier Räder 3 ohne Bodenkontakt sein, beim Antriebs- bzw. Lenkrad 7 darf das jedoch keinesfalls vorkommen, da das Fahrzeug sonst stehen bliebe oder aus der vorgesehenen Fahrspur rollen könnte. Das Antriebs- bzw. Lenkrad 7 ist deshalb dem erforderlichen Höhenausgleich entsprechend abgefedert. Bekannte Federsysteme sind in den Figuren 1 bis 3 dargestellt.

An der Unterseite des Fahrzeugs 1 ist eine Schwinge 11 (Figur 1) um eine horizontale Achse A schwenkbar gelagert und mittels einer oder mehrerer Federn 12 am Fahrzeug abgestützt. Die Schwinge 11 nimmt an ihrer Unterseite den einen Ring eines Drehkranzlagers 13 auf, dessen anderer Ring an einer Stützplatte 14 angeordnet ist, die an der Antriebseinheit 4 befestigt ist. Der Motor 5, das von ihm verdeckte, dahinterliegende Getriebe und das Antriebs- bzw. Lenkrad 7 sind - wie auch bei den anderen Ausführungen - koaxial mit einer gemeinsamen Achse 8 angeordnet. Die Schwenkachse A liegt immer parallel zur Achse 8. Beim Überfahren von Bodenunebenheiten macht die Schwinge 11, je nachdem, ob es sich um eine Vertiefung oder um eine Erhöhung des Bodens handelt, eine Schwenkbewegung um die Achse A im Uhrzeigersinn oder entgegengesetzt. Im ersteren Fall werden die Federn 12 entspannt, im letzten Fall zusammengedrückt. Der gesamte Federweg muß so groß sein, daß der erforderliche Höhenausgleich des Antriebs- bzw. Lenkrades 7 sichergestellt ist. Außerdem müssen die Federn so ausgelegt sein, daß das Antriebs- bzw. Lenkrad immer mit dem erforderlichen Druck gegen den Boden gedrückt werden. ohne daß es, wenn die Federn 12 zusammengedrückt werden, zu einem Abheben der der Antriebseinheit benachbarten Räder 3 kommen kann.

Der Aufbau der Antriebseinheit und die Anlenkung am Fahrzeug entsprechen bei der Ausführung nach Fig. 2 ganz der nach Fig. 1, lediglich die Feder ist anders angeordnet. Am Fahrzeug 1 ist ein sich nach unten erstreckender Arm 17 angebracht, der bis unter die Schwinge 11 reicht, die sich über ein oder mehrere Zugfedern 18 auf dem Arm 17 abstützt. Bei dieser Ausführung steht für die Federn mehr Bauraum zur Verfügung, so daß die Auslegung der Federcharakteristik einfacher ist. Die Verwendung von Zugfedern ist andrerseits nicht ohne Probleme.

Bei der Ausführung nach Fig. 3 ist das Drehkranzlager zwischen dem Fahrzeug 1 und einer Stützplatte 21 angeordnet. Die Antriebseinheit ist mit einer sich in (oder gegen) Fahrtrichtung von ihr weg weisenden, doppelt abgewinkelten und die Antriebseinheit untergreifenden Schwinge 22 ausgestattet. Beiderseits des Motors 5 bzw. des Getriebes sind Druckfedern 23 zwischen der Stützplatte 21 und dem die Antriebseinheit untergreifenden Ausleger 24 der Schwinge 22 angeordnet Die Schwenkachse A ist hier identisch mit der Achse 8.

Zum Lenken wird die Antriebseinheit 4 jeweils um die Achse 9 geschwenkt, wozu an der Stützplatte 14, 21 eine nicht dargestellte Kette befestigt ist, die von einer im Fahrzeug untergebrachten Lenkeinrichtung bewegt wird. Solche Lenkeinrichtungen sind bekannt, z. B. von der DE-PS 34 20 146, so daß hier nicht darauf eingegangen zu werden braucht.

Die erfindungsgemäße Ausführung einer Antriebseinheit ist in Fig. 4 gezeigt, und zwar in einer den Fig. 1 bis 3 entsprechenden schematischen Darstellung. An der Unterseite des Fahrzeugs 1 ist der eine Ring des Drehkranzlagers 13 befestigt, der andere Ring ist an einer Stützplatte 26 angeordnet. Von der Stützplatte 26 erstreckt sich ein Arm 27 nach unten, und zwar in Fahrtrichtung gesehen vor oder hinter der Antriebseinheit. Am unteren Ende des Armes 27 ist ein Ende einer Schwinge 28 angelenkt (Schwenkachse A). Am anderen Ende der Schwinge 28, die etwa in ihrer Mitte mit dem Gehäuse des Motors 5 und/oder des Getriebes 6 drehfest verbunden ist, stützt sich die Schwinge 28 und damit die ganze Antriebseinheit über eine oder mehrere Federn 29 an der Stützplatte 26 ab.

Gegenüber den bekannten Ausführungen gemäß Fig. 1 bis 3 ist bei der erfindungsgemäßen Ausführung nach Fig. 4 die Drehachse A so gewählt, daß am Umfang des Antriebsrades 7 beim Bremsen oder Beschleunigen auftretende Rückstellkraft $F_u$ sehr klein wird, und zwar unabhängig von der Fahrtrichtung. Durch diese Anordnung der Drehachse A wird ein sogenanntes "Nicken" des Antriebsrades 7, d.h. ein Abheben des Antriebsrades von der Fahrbahn, vermieden. Befände sich die Drehachse A auf gleicher Höhe mit dem Berührpunkt B des Antriebsrades 7 auf der Fahrbahn, so würde sich die Rückstellkraft $F_u$ auf den Wert Null verringern.

Außer der Rückstellkraft $F_u$ wirken noch andere Kräfte auf das Antriebsrad 7 ein, nämlich die Federkraft $F_F$ von der Feder 12, 18, 29 und die sogenannte "wirksame Bodenaufstandskraft $F_w$. Ganz allgemein gilt daß die Summe der von diesen Kräften hervorgerufenen Momente Null oder kleiner sein soll, oder, mathematisch ausgedrückt

$$\Sigma M = - F_F . (X + X') - F_w . X' \pm F_u . Y \leqq 0,$$

wobei linksdrehende Momente ein positives, rechtsdrehende Momente ein negatives Vorzeichen haben.

Vergleicht man die Längen der Hebelarme bei den Figuren 1 bis 4 miteinander, so zeigt sich, daß bei den Fig. 1 bis 3 jeweils mindestens ein Hebelarm länger ist als bei Fig. 4, also ungünstiger. Denn, wie schon erwähnt, wenn die Länge des Hebelarmes Y gegen Null geht, so geht auch das Produkt $F_u . Y$ gegen Null, wodurch das System frei von Rückstellkräften wird. Ginge der Hebelarm Y dagegen Unendlich, würde das Antriebsrad beim Bremsen oder Beschleunigen, je nach Fahrtrichtung, von der Fahrbahn abheben.

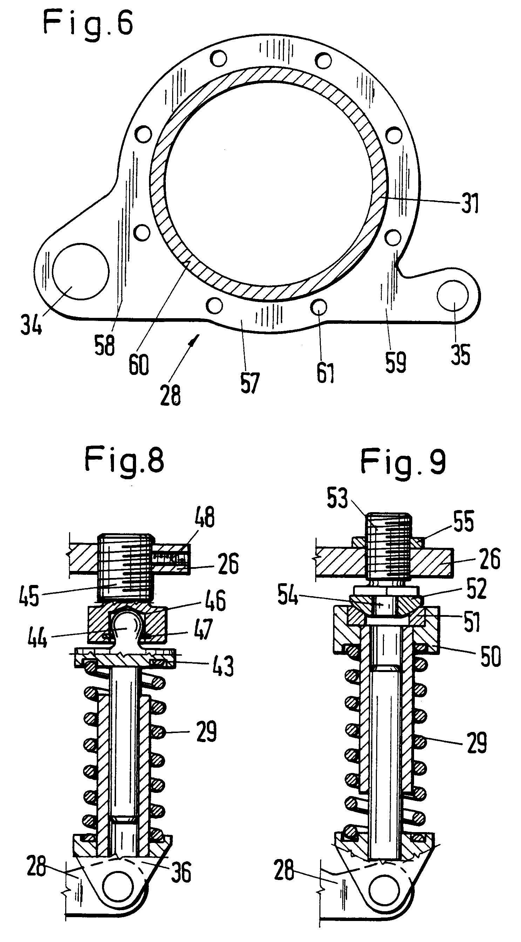

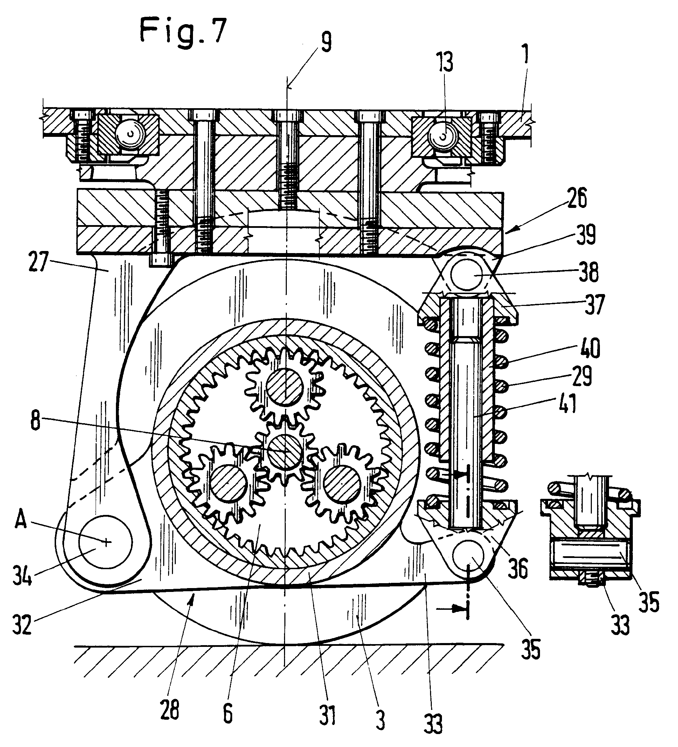

Figur 6 zeigt eine der verschiedenen möglichen Ausführungen für die Schwinge 28: ein scheibenförmiges, zwei Ansätze 58 59 aufweisendes Bauteil 57, das in einer Bohrung 60 das Gehäuse des Motors 5 oder des Getriebes 6 aufnimmt und an Bohrungen 61 mit diesem verschraubt wird. Am Ansatz 58 ist die Schwinge mittels eines Zapfens 34 schwenkbar am Arm 27 gelagert und am Ansatz 59 ist ein Federteller 36 mittels eines Zapfens 35 angelenkt, worauf noch eingegangen wird.

Figur 7 zeigt eine andere, herstellungsmäßig einfachere Ausführung der Schwinge 28 und die Anordnung der Feder 29. Am Gehäuse 31 des Getriebes 6 sind zwei Laschen 32, 33 angegossen, von denen die eine (32) mittels des Zapfens 34 schwenkbar am Arm 27 gelagert ist. An der anderen Lasche 33 ist mittels des Zapfens 35 der Federteller 36 angelenkt, gegen den sich das eine Ende der Feder 29 abstützt. Die Schwinge 28 ist somit vom Gehäuse 31 mit den beiden Laschen 32, 33 gebildet. Das andere Ende der Feder 29 stützt sich an einem Federteller 37 ab, der mittels eines Zapfens 38 an einer Nase 39 der Stützplatte 26 angelenkt ist. Um die Feder 29 am Ausknicken zu hindern, ist am Federteller 37 ein Führungsrohr 40 angebracht, das über einer im Federteller 36 befestigten Stange 41 längsverschiebbar aufgenommen ist. Die Stange 41 und das Führungsrohr 40 sind so innerhalb der Windungen der Feder 29 angeordnet, daß nur wenig radialer Abstand zwischen der Feder und dem Führungsrohr besteht.

In verschiedenen Fällen ist es erwünscht, daß die Länge bzw. die Kraft der Feder 29 einstellbar ist. Ein Ausführungsbeispiel dafür ist in Fig. 8 dargestellt. Der Federteller an der Stützplatte 26 ist hier mit 43 bezeichnet. An seiner Oberseite weist er einen kugelförmigen Ansatz 44 auf, der in eine entsprechende Ausnehmung 46 einer in die Stützplatte 26 eingeschraubten Einstellschraube 45 ragt und mit einem Sprengring 47 gegen Herausrutschen gesichert ist. Wird die Einstellschraube 45 weiter in die Stützplatte 26 eingeschraubt, wird die Feder 29 entspannt und damit länger. Andrerseits wird die Feder 29 mehr vorgespannt, wenn die Einstellschraube 45 weniger weit in die Stützplatte 26 eingeschraubt wird. Nach dem Einstellen der Feder 29 wird die Einstellschraube 45 mit einer Madenschraube 48 oder in anderer Weise gegen ungewolltes Verstellen gesichert.

Anstelle der vorstehend beschriebenen Ausführung mit dem etwas schwierig herstellbaren kugelförmigen Ansatz kann auch die in Fig. 9 gezeigte Ausführung angewendet werden, die ebenfalls auf dem Prinzip eines sphärischen Axiallagers basiert. Zwischen der Stützplatte 26 und einem Federteller 50 ist ein wartungsfreies Axial-Gelenklager angeordnet: der konkave Ring 51 dieses Gelenklagers ist in einer Ausnehmung des Federtellers aufgenommen und der konvexe Ring 52 von einem Zapfen 54 an einer Einstellschraube 53. Die Funktion der Einstellschraube 53 entspricht der der Einstellschraube 45. Zum Sichern ist hier eine Kontermutter 55 vorgesehen.

Die Erfindung ist nicht auf die beschriebenen Ausführungsbeispiele beschränkt. So sind z.B. für die Form der Schwinge 28 nach Fig. 6 viele Varianten denkbar, auch für die Art der Befestigung am Gehäuse des Getriebes oder des Motors, die übrigens auch in einem gemeinsamen Gehäuse untergebracht sein können. Die in den Fig. 8 und 9 gezeigten Einrichtungen zum Verändern der Federspannung können sinngemäß auch an dem an der Schwinge 28 angelenkten Federteller vorgesehen sein.

**Patentansprüche**

1. Antriebseinheit für ein Fahrzeug in einem fahrerlosen Transport-System (FTS), bei dem die im wesentlichen aus E-Motor, Getriebe und Antriebsrad mit gemeinsamer Rotationsachse bestehende Antriebseinheit an der Unterseite des Fahrzeugs in einem Drehkranzlager um eine vertikale Achse schwenkbar aufgenommen ist und nur dem Antrieb und der Lenkung dient, während das Fahrzeug auf separaten Losrädern fährt, dadurch gekennzeichnet, daß neben dem Antriebsrad (7) und unterhalb der Rotationsachse (8) eine im wesentlichen horizontale, am Getriebe- und/oder Motorgehäuse in Fahrtrichtung beiderseits vorstehende Schwinge (28) vorgesehen ist, deren eines Ende an einem sich von einer am Drehkranzlager (13) befestigten Stützplatte (26) nach unten erstreckenden Arm (27) um eine parallel zur Rotationsachse (8) gerichtete Achse (A) angelenkt ist, und deren anderes Ende über eine im wesentlichen vertikal wirkende, an der Schwinge (28) und/oder an der Stützplatte (26) angelenkte Federanordnung (Feder 29) am Drehkranzlager (13) abgestützt ist.

2. Antriebseinheit nach Anspruch 1, dadurch gekennzeichnet, daß die Schwinge (28) mit dem Motor- und-/oder Getriebegehäuse (31) einstückig ausgeführt ist.

3. Antriebseinheit nach Anspruch 1, dadurch gekennzeichnet, daß die als separates Bauteil (57) ausgeführte Schwinge (28) das Motor- und/oder Getriebegehäuse in einer entsprechenden Bohrung (60) verdrehgesichert aufnimmt.

4. Antriebseinheit nach einem der Ansprüche 1 bis 3, dadurch gekennzeichnet, daß die Federanordnung im wesentlichen von einer gegen Ausknicken gesicherten Schraubenfeder (29) gebildet ist, die sich an an der Schwinge (28) bzw. an der Stützplatte (26) angelenkten Federtellern (36,37; 43; 50) abstützt.

5. Antriebseinheit nach Anspruch 4, dadurch gekennzeichnet, daß zumindest einer der beiden Federteller (43, 50) über ein im Sinne einer Veränderung der Federvorspannung verstellbares sphärisches Axiallager an der Stützplatte (26) bzw. an der Schwinge (28) angelenkt ist.

6. Antriebseinheit nach Anspruch 5, dadurch gekennzeichnet, daß der Federteller (43) auf der der Schraubenfeder (29) abgewendeten Seite einen kugelförmigen Ansatz (44) aufweist, der in einer entsprechenden Ausnehmung (46) einer in der Stützplatte (26) bzw. in der Schwinge (28) höhenverstellbaren Einstellschraube (45) aufgenommen ist.

7. Antriebseinheit nach Anspruch 5, dadurch gekennzeichnet, daß der Federteller (50) auf der der Schraubenfeder (29) abgewendeten Seite den einen Ring (51) eines Axial-Gelenklagers (Kalottenlager) aufweist, dessen anderer Ring (52) von einer in der Stützplatte (26) bzw. in der Schwinge (28) höhenverstellbaren Einstellschraube (53) aufgenommen ist.

## Claims

1. A drive unit for a vehicle in a driver-free transport system (DTS) in which the drive unit, which substantially consists of an electric motor, a gearing and a drive wheel with a common axis of rotation, is received on the lower side of the vehicle in a ring-mount bearing so as to be swivellable about a vertical axis and only serves the purpose of drive and steering, whilst the vehicle travels on separate loose wheels, characterised in that a rocker (28), which is substantially horizontal and projects in the direction of travel on both sides of the gearing housing and/or motor housing, is provided next to the drive wheel (7) and beneath the axis of rotation (8), one end of which rocker (28) is hinged to an arm (27), which extends downwards from a supporting plate (26) attached to the ring-mount bearing (13), about an axis (A) aligned so as to be parallel to the axis of rotation (8), and the other end of which is supported on the ring-mount bearing (13) via a spring arrangement (spring 29), which acts in a substantially vertical manner and is hinged to the rocker (28) and/or to the supporting plate (26).

2. A drive unit according to Claim 1, characterised in that the rocker (28) is designed so as to be in one piece with the motor housing and/or gearing housing (31).

3. A drive unit according to Claim 1, characterised in that the rocker (28) designed as a separate component (57) receives the motor housing and/or gearing housing in a corresponding bore (60) so as to secure it against twisting.

4. A drive unit according to any one of Claims 1 to 3, characterised in that the spring arrangement is substantially formed by a coil spring (29) which is secured against buckling and which is supported on spring plates (36,37;43;50), which are hinged to the rocker (28) and/or to the supporting plate (26).

5. A drive unit according to Claim 4, characterised in that at least one of the two spring plates (43, 50) is hinged to the supporting plate (26) and/or to the rocker (28) via a spherical axial bearing which can be adjusted in order to change the initial spring tension.

6. A drive unit according to Claim 5, characterised in that the spring plate (43) has a spherical lug (44) on the side facing away from the coil spring (29), this lug being received in a corresponding recess (46) of a setting screw (45) which is vertically adjustable in the supporting plate (26) and/or in the rocker (28).

7. A drive unit according to Claim 5, characterised in that the spring plate (50) has one ring (51) of an axial hinge-bearing (cap-shaped bearing) on the side facing away from the coil spring (29), the other ring (52) of which axial hinge-bearing is received by a setting screw (53) which is vertically adjustable in the supporting plate (26) and/or in the rocker (28).

## Revendications

1. Unité de propulsion pour un véhicule dans un système de transport sans chauffeur (FTS), dans lequel l'unité de propulsion, constituée essentiellement d'un moteur électrique, d'une transmission et d'une roue motrice, est montée sur la face inférieure du véhicule dans un palier à couronne rotative de façon à pouvoir pivoter sur un axe vertical, et ne sert qu'à la propulsion et la direction, tandis que le véhicule se déplace sur des roues libres distinctes, unité de propulsion caractérisée en ce qu'il est prévu, à côté de la roue motrice (7) et au-dessous de son axe de rotation (8), une bielle oscillante (28) essentiellement horizontale, faisant saillie des deux côtés, dans la direction de déplacement du véhicule, sur le carter de la transmission et/ou du moteur, et dont une extrémité est articulée sur un axe (A) parallèle à l'axe de rotation (8) de la roue motrice, à un bras (27) s'étendant vers le bas à partir d'une plaque d'appui (26) fixée sur le palier à couronne rotative (13), tandis que l'autre extrémité de cette bielle prend appui contre le palier à couronne rotative (13) par l'intermédiaire d'un dispositif élastique (ressort 29) agissant essentiellement verticalement et articulé à la bielle (28) et/ou à la plaque d'appui (26).

2. Unité de propulsion selon la revendication 1, caractérisée en ce que la bielle oscillante (28) est réalisée d'une seule pièce avec le carter (31) du moteur et/ou de la transmission.

3. Unité de propulsion selon la revendication 1, caractérisée en ce que la bielle oscillante (28) réalisée sous la forme d'un élément constitutif distinct (57), reçoit le carter du moteur et/ou de la transmission, bloqué en rotation, dans un alésage approprié (60).

4. Unité de propulsion selon une des revendications 1 à 3, caractérisée en ce que le dispositif élastique est essentiellement constitué par un ressort hélicoïdal (29), protégé contre le flambage, qui prend appui contre des coupelles de ressort (36, 37; 43; 50) articulées à la bielle oscillante (28) et/ou à la plaque d'appui (26).

5. Unité de propulsion selon la revendication 4, caractérisée en ce qu'au moins une des deux coupelles de ressort (43, 50) est articulée à la plaque d'appui (26) ou à la bielle oscillante (28) par l'intermédiaire d'un palier axial sphérique susceptible d'être réglé pour permettre de modifier la précontrainte du ressort.

6. Unité de propulsion selon la revendication 5, caractérisée en ce que la coupelle de ressort (43) comporte, sur son côté opposé au ressort hélicoïdal (29), un appendice (44) en forme de sphère qui est logé dans l'évidement correspondant (46) d'une vis de réglage (45) susceptible d'être déplacée en hauteur dans la plaque d'appui (26) ou dans la bielle oscillante (28).

7. Unité de propulsion selon la revendication 5, caractérisée en ce que la coupelle de ressort (50) comporte, sur son côté opposé au ressort hélicoïdal (29), l'un (51) des anneaux d'un palier axial articulé (palier à calotte) dont l'autre anneau (52) est reçu par une vis de réglage (3) susceptible d'être déplacée en hauteur dans la plaque d'appui (26) ou dans la bielle oscillante (28).

Fig.1

Fig. 2

Fig. 3

Fig. 4

Fig. 5

## Fig.6

31

34

58

60

28

57

61

59

35

## Fig.8

48

26

45

46

44

47

43

29

28

36

## Fig.9

53

55

26

54

52

51

50

29

28

# Fig.7